# FASCICULE DE BREVET EUROPEEN

(11) **EP 2 465 772 B1**
(45) Date de publication et mention de la délivrance du brevet: **20.11.2013**
(21) Numéro de dépôt: 11193473.3
(22) Date de dépôt: 14.12.2011
(51) Int. Cl.: B64C 21/04, F15D 1/08

(54) **Micro-générateur fluidique de jets synthétiques**
Fluidischer Mikrogenerator von synthetischen Sprühstrahlen
Fluidic micro-generator of synthetic jets

(30) Priorité: 14.12.2010 FR 1060487
(43) Date de publication de la demande: 20.06.2012
(73) Titulaire: ONERA (Office National d'Etudes et de Recherches Aérospatiales), 92320 Châtillon (FR)
(72) Inventeur: Ternoy, Frédéric, 62223 Feuchy (FR); Uzeel, Etienne, 59320 Radinghem En Weppes (FR); Landaes, Didier, 59290 Wasquehal (FR)
(74) Mandataire: Cabinet Plasseraud

(56) Documents cités:
- FR-A1- 2 859 160
- FR-A1- 2 890 637

## Description

### OBJET DE L'INVENTION :

L'invention concerne le domaine des micro-générateurs destinés au contrôle d'un écoulement principal de fluide par des jets fluidiques secondaires. L'écoulement principal de fluide à contrôler peut par exemple être un écoulement aérodynamique externe comme pour l'hypersustentation des avions, le contrôle des tremblements des ailes d'avion, la traînée des automobiles ou des trains de véhicules ferroviaires. L'écoulement principal à contrôler peut également être un écoulement aérodynamique interne comme les entrées d'air des moteurs d'aéronefs.

L'écoulement d'un fluide autour d'une structure est modifié par des jets de fluide secondaires issus de trous traversant la surface externe de la structure. L'invention concerne en particulier des générateurs de tels jets secondaires.

On distingue deux types de générateurs de jets situés à l'intérieur d'une structure. Il y a des générateurs de jets pulsés reliés à une source de fluide indépendante du fluide de l'écoulement principal. Il y a également des générateurs de jets synthétiques, à débit moyen nul, qui puisent le fluide des jets secondaires dans l'écoulement principal et l'éjecte ensuite dans l'écoulement. L'invention concerne tout particulièrement les générateurs de jets synthétiques.

### ETAT DE LA TECHNIQUE :

La demande FR2 859 160 décrit notamment un générateur de jets synthétiques équipé d'un actionneur piézoélectrique et d'un piston et peut être commandé en fréquence et en amplitude. Cependant, la vitesse des jets pouvant être émis peut être limitée.

La demande de brevet US2010/0044459 décrit plusieurs générateurs de jets synthétiques utilisant une couche d'empilement de cellules piézoélectriques réparties sur un côté d'une membrane mécanique délimitant une cavité d'air. Lorsque les cellules sont activées, la couche piézoélectrique se contracte ou se dilate. Cela force la membrane à se bomber. Le volume de la cavité est ainsi réduit et un jet d'air est expulsé de la cavité par un orifice. L'effet piézoélectrique présente l'avantage de transformer simplement une tension électrique en déformation mécanique. Cependant, de tels générateurs de jets synthétiques présentent plusieurs inconvénients qui en limitent les applications. Le déplacement engendré par les cellules piézoélectriques n'est que de quelques micromètres. La déformation de la membrane n'est significative que si la couche piézoélectrique est excitée à la fréquence propre de vibration de la membrane métallique. Une fois la membrane entrée en résonnance, il est difficile d'agir sur la tension d'excitation de la couche piézoélectrique pour faire varier l'amplitude de la déformation de la membrane.

En dehors de la fréquence propre de résonance de la membrane, la déformation de la membrane obtenue par la couche piézoélectrique est très réduite de sorte que la vitesse du jet d'air généré est peu utilisable. Lorsque l'on veut contrôler un écoulement principal le long d'une structure et que l'on veut faire varier la fréquence des jets synthétiques générés, la technologie de générateur décrite dans le document précité impose d'actionner un autre générateur dont la membrane résonne à la fréquence souhaitée.

De plus, l'actionneur décrit présente une cavité ayant un volume mort important qui se comporte comme un atténuateur du jet généré. Par exemple, une variation du volume de la cavité de X mm³ due à la déformation de la membrane engendre une augmentation de la pression et, seule une proportion de ces X mm³ est éjectée de la cavité sous forme de jets synthétiques.

L'article « a High-speed compressible synthetic jet" de T.M. Crittenden & al. Physic of fluids 18, 017107 (2006) décrit un générateur de jets synthétiques dont l'amplitude de vitesse du fluide éjecté est figée pour une fréquence donnée du jet. Cela présente l'inconvénient de ne pas pouvoir adapter l'intensité de la vitesse du jet en fonction de la perturbation de l'écoulement principal.

### PROBLEME TECHNIQUE RESOLU PAR L' INVENTION :

L'invention propose un générateur de jets synthétiques et un dispositif de contrôle d'un écoulement fluidique utilisant de tels générateurs qui remédient à au moins l'un des inconvénients précités.

Un but de l'invention est d'élargir la gamme d'utilisation des générateurs de jets synthétiques en permettant notamment de commander de manière séparée la fréquence des jets et l'amplitude des vitesses des jets.

### DESCRIPTION GENERALE DE L'INVENTION :

Selon un mode de réalisation, le générateur de jets synthétiques comprend une cavité délimitée par une paroi fixe et une paroi mobile. La paroi fixe comporte une chemise et une culasse munie d'un orifice par lequel est aspiré et éjecté le jet généré de fluide dans l'écoulement principal de fluide. La paroi mobile est en regard de la culasse. Le générateur comprend un piston rigide incluant la paroi mobile et coulissant de façon étanche dans la chemise. Le générateur comprend en outre un actionneur lié mécaniquement au piston apte à entraîner le piston dans un mouvement alternatif présentant une amplitude et une fréquence, l'actionneur étant apte à fournir un mouvement d'amplitude et de fréquence variables, au moins l'amplitude étant variable pendant le mouvement. L'actionneur comprend un mécanisme d'amplification mécanique de déplacement.

On comprend que l'amplification de déplacement permet de disposer d'une amplitude significative de variation de volume de la cavité. Le fait que cela soit obtenu par un mécanisme d'amplification mécanique de déplacement et non par résonnance propre de l'actionneur permet de disposer de cette amplitude significative pour des fréquences hors de la fréquence de résonnance mécanique de l'actionneur.

De plus, le fait que la paroi mobile soit inclue dans un piston rigide fait que la fréquence propre de résonnance dans la direction de coulissement de la paroi est très au-dessus de la gamme de fréquence des jets à éjecter. Ainsi, l'impédance mécanique que voit l'actionneur est sensiblement constante ou à variation lente quelque soit la fréquence de commande de l'actionneur. Autrement dit, la paroi mobile ne se comporte pas comme un filtre de fréquence et le générateur peut être utilisé sur une gamme de fréquences plus large. Enfin, la commande en amplitude de l'actionneur va engendrer une variation d'amplitude de la vitesse des jets d'air générés, ce qui n'était pas le cas des actionneurs à membrane résonante.

Selon un mode de réalisation, l'actionneur comprend un barreau piézoélectrique.

Avantageusement, le mécanisme d'amplification mécanique de déplacement comprend une structure mécanique déformable, raccordée au, et distinct du barreau piézoélectrique, ladite structure étant agencée dans le générateur de manière qu'une variation de longueur du barreau piézoélectrique déforme la structure mécanique et provoque le déplacement du piston.

Avantageusement, le barreau piézoélectrique présente un empilement de cellules piézoélectriques montées en série le long d'un axe du barreau passant par deux extrémités opposées du barreau. Le fait que les cellules piézoélectriques soient disposées en série permet de multiplier par le nombre de cellules la variation de longueur du barreau piézoélectrique en activant simultanément toutes les cellules piézoélectriques. Ainsi, la variation d'épaisseur de quelques micromètres de chaque cellule piézoélectrique peut engendrer une variation de longueur du barreau piézoélectrique de quelques dizaines, voire quelques centaines de micromètres. Ainsi, on peut obtenir un déplacement important des extrémités du barreau tout en profitant de l'aptitude des actionneurs piézoélectriques à être commandés à haute fréquence, par exemple supérieure à 1 kHz. Cependant, augmenter l'amplitude de déplacement uniquement en augmentant le nombre de cellules empilées conduirait à augmenter l'encombrement du générateur de manière incompatible avec l'application visée. On souhaite en effet pouvoir disposer de tels générateurs en paroi d'un écoulement principal de fluide. Il faut que ces générateurs restent intégrables dans la paroi qui délimite cet écoulement principal. L'actionnement fourni par un système piézoélectrique est souvent plus limité par son faible déplacement que par l'effort engendré. Grâce au mécanisme d'amplification mécanique de déplacement, on augmente le déplacement du piston sans augmenter significativement l'encombrement du générateur. On obtient des vitesses d'éjection de jets pouvant être proches, voire supérieures à la vitesse du son. Autrement dit, le fait d'avoir recours à une amplification mécanique de déplacement permet un meilleur compromis entre la vitesse d'éjection des jets et l'encombrement du générateur.

L'amplification mécanique de déplacement peut être d'un coefficient compris entre 5 et 150, de préférence compris entre 10 et 100.

Avantageusement, l'actionneur est apte à ce que la variation de l'amplitude du mouvement soit commandable de manière séparée de la variation de la fréquence du mouvement. Autrement dit, pour chaque fréquence du mouvement, il est possible de faire varier l'amplitude de ce mouvement dans une plage, de même, à chaque amplitude il est possible de faire varier la fréquence dans une plage. Les différentes plages définissent une zone d'un diagramme amplitude/fréquence sur lequel l'amplitude et la fréquence du mouvement peuvent être choisies à volonté.

Selon une variante, le générateur présente une plage de fréquence des jets générés. L'actionneur présente une fréquence propre de résonnance dans la direction de coulissement du piston supérieure à ladite plage de fréquence des jets générés. Autrement dit, l'actionneur présente une fréquence propre de résonnance dans la direction de coulissement du piston supérieure à un seuil prédéterminé, destinée à être hors d'une plage de fréquence des jets générés.

Dans cette variante, non seulement la paroi mobile ne présente pas de résonnance dans la plage de fréquence des jets générés, mais l'actionneur lui-même présente une impédance mécanique à variation lente dans la plage d'utilisation. Cela permet d'utiliser le générateur de jets synthétiques en boucle ouverte, puisqu'une consigne de commande de l'actionnement se traduit par une commande en fréquence et/ou en amplitude des vitesses de jets générés.

Selon un mode de réalisation, l'actionneur est lié mécaniquement à un point de raccordement du piston par un moyen de raccordement qui présente au moins une direction de rigidité le long de laquelle le moyen de raccordement est apte à transmettre un effort et un déplacement de l'actionneur et qui est mobile selon une direction transversale à la direction de rigidité.

Avantageusement, le moyen de raccordement est un pont de matière apte à transmettre un déplacement de l'actionneur sans présenter de jeu mécanique.

Avantageusement, le pont de matière est déformable élastiquement en flexion selon une direction transversale à la direction de rigidité.

Selon une variante, le piston est mobile en translation, parallèlement au déplacement dudit point de raccordement.

Selon une autre variante, le piston est mobile en rotation autour d'un axe transversal au déplacement dudit point de raccordement et à distance de ce point.

Avantageusement, l'axe du barreau piézoélectrique est sensiblement perpendiculaire à la direction de coulissement du piston. Dans la variante où le piston est mobile en rotation, l'axe du barreau piézoélectrique est avantageusement perpendiculaire à la direction de déplacement du point du piston où est raccordé l'actionneur. De manière encore plus avantageuse, l'axe du barreau piézoélectrique est parallèle à l'axe de rotation du piston. Cela permet de réduire l'encombrement du micro-générateur sous la paroi délimitant l'écoulement principal à contrôler. De plus, cette réduction d'encombrement est compatible avec une juxtaposition côte à côte de plusieurs micro-actionneurs.

Avantageusement, le générateur comprend un moyen de guidage du coulissement du piston dans la chemise, lequel moyen est distinct de la chemise elle-même.

Selon une variante, le piston présente une surface d'étanchéité s'étend en regard d'une zone de coulissement de la chemise, la surface d'étanchéité ou la zone de coulissement étant pourvue d'au moins une gorge constituant une perte charge s'opposant à un écoulement du fluide entre la surface d'étanchéité et la zone de coulissement.

Selon une autre variante, le générateur comprend un joint élastomère annulaire présentant un bord radialement intérieur fixé sur le pourtour du piston et un bord radialement extérieur fixé à la paroi fixe. Le joint annulaire évite les fuites de fluide entre le piston et la paroi fixe. L'élastomère étant très mou et les déplacements du piston étant réduits (par exemple de l'ordre de 500 µm) , la dispersion d'énergie due aux joints est réduite et ne provoque pas de résonnance dans la plage de fréquence visée, par exemple de 10 à 1 000 Hertz.

Par ailleurs, selon une variante, l'actionneur est commandé en boucle ouverte, en fréquence et/ou en amplitude.

Selon une autre variante, le générateur comprend un dispositif d'asservissement de l'actionneur relié à un moyen de réception d'une consigne de vitesse de jet et de fréquence, et relié à un capteur de déplacement du piston.

Cette autre variante peut être utilisée de manière alternative ou combinée à la variante précédente. L'asservissement en fonction du déplacement du piston permet de s'affranchir de la variation d'impédance mécanique de l'actionneur dans la plage d'utilisation.

Selon un mode de réalisation, l'actionneur comprend quatre bras raccordés successivement les uns aux autres par quatre points de raccordement pour former ensemble une boucle fermée, lesdits points de raccordement successifs étant respectivement raccordés à la paroi fixe, à l'une des extrémités du barreau piézoélectrique, au piston, et à l'autre extrémité du barreau piézoélectrique. La boucle formée par les quatre bras concaténés entre eux peut être par exemple du type losange articulé ou ellipse. Cette boucle constitue une variante possible de la structure déformable, reliée au et distinct du barreau piézoélectrique qui permet l'amplification mécanique du déplacement engendré par le barreau.

Le barreau agit sur un des axes de la boucle qui se déforme alors selon l'autre axe. Selon les dimensions de la boucle, cette transformation de mouvement peut se faire avec amplification du déplacement du piston.

Dans une variante, l'actionneur comporte un ou plusieurs bras de levier comprenant un point de raccordement pivot fixe, un point de raccordement à une extrémité du barreau piézoélectrique et un point de raccordement au piston. Ces bras de leviers articulés chacun autour d'un pivot fixe constitue une autre variante possible de structure déformable permettant l'amplification de déplacement.

Avantageusement, tous les points de raccordement précités de l'actionneur sont des axes pivots constitués par un pont en matériau déformable élastiquement de manière à ne pas présenter de jeu mécanique. L'absence de jeu mécanique permet que la transmission de mouvements se fasse de manière symétrique, tant pour l'éjection du fluide de la cavité que pour l'aspiration du fluide de l'écoulement principal vers l'intérieur de la cavité.

Selon un mode de réalisation, la cavité présente un volume qui varie entre un volume mort et un volume maximum en fonction de la position du piston, et dans lequel le volume mort est inférieur ou égal à la moitié du volume maximum, de préférence inférieur au cinquième du volume maximum, en particulier inférieur au dixième du volume maximum. Le volume mort réduit permet d'améliorer la transformation du volume de fluide déplacé par le piston en volume de fluide traversant l'orifice.

Selon un mode de réalisation, le générateur comprend un corps principal auquel sont solidarisés successivement l'actionneur puis le piston. Le générateur comprend en outre un couvercle fixe par rapport au corps principal et délimitant la cavité par une surface intérieure plane. Le piston délimite la cavité par une surface frontale plane disposée parallèlement à la surface intérieure du couvercle. Le parallélisme entre la surface intérieure du couvercle et la surface frontale du piston rigide permet de réduire le volume mort à quasiment zéro.

Avantageusement, le générateur comprend une cale de réglage disposée entre le couvercle et le corps principal. Le piston coulisse dans la cale de réglage. Cela permet d'ajuster le volume mort au strict minimum sans être pénalisé par les tolérances de fabrication des actionneurs.

Avantageusement, le dispositif d'asservissement est relié à l'alimentation électrique du barreau piézoélectrique, le capteur de déplacement du piston comprenant un pont de jauges disposées sur les bras en boucle.

Avantageusement, l'actionneur comprend un corps monobloc déformable incluant un socle de fixation, les quatre bras en boucle et une semelle de raccordement au piston.

Avantageusement, l'actionneur comprend un premier mécanisme piloté en fréquence ou en amplitude, monté en série avec un deuxième mécanisme piloté en amplitude seulement. Le premier mécanisme peut avantageusement comprendre un barreau piézoélectrique et le deuxième mécanisme peut être un actionneur classique convenant pour des variations lentes. Le deuxième mécanisme peut être utilisé pour modifier la position du point d'appui du premier mécanisme et ainsi décaler le point milieu de la course du piston et faire varier le volume mort de la cavité. En particulier, il est ainsi possible d'optimiser le volume mort de la cavité au cours de la variation d'amplitude engendré par le premier mécanisme.

Selon un autre aspect, l'invention porte également sur un dispositif de contrôle d'un écoulement fluidique par jets synthétiques comprenant une paroi principale le long de laquelle s'écoule un fluide et comprenant un générateur de jets synthétiques précités, dans lequel l'orifice traverse la paroi principale et relie la cavité à l'écoulement de fluide, et dans lequel la cavité est remplie de ce même fluide.

### BREVE DESCRIPTION DES FIGURES :

La présente invention sera mieux comprise à l'étude de la description détaillée de quelques modes de réalisation pris à titre d'exemples nullement limitatifs et illustrés par les dessins annexés sur lesquels :
   - La figure 1 est une coupe longitudinale d'un premier mode de réalisation de générateur de jets synthétiques,
   - La figure 2 est une coupe transversale selon le plan II-II de la figure 1,
   - La figure 3 est une coupe longitudinale selon le plan III-III de la figure 4, d'un deuxième mode de réalisation de générateur de jets synthétiques,
   - La figure 4 est une coupe transversale selon le plan IV-IV de la figure 3, et
   - La figure 5 est une coupe transversale partielle selon le plan V-V de la figure 4.
   - La figure 6 est une coupe selon le plan VI-VI de la figure 7, et illustre un autre mode de réalisation équipé d'un piston monté en rotation autour d'un axe,
   - La figure 7 est une coupe selon le plan VII-VII de la figure 6, et
   - La figure 8 est une vue en perspective du piston du mode de réalisation des figures 6 et 7.

### DESCRIPTION DETAILLEE DE L' INVENTION :

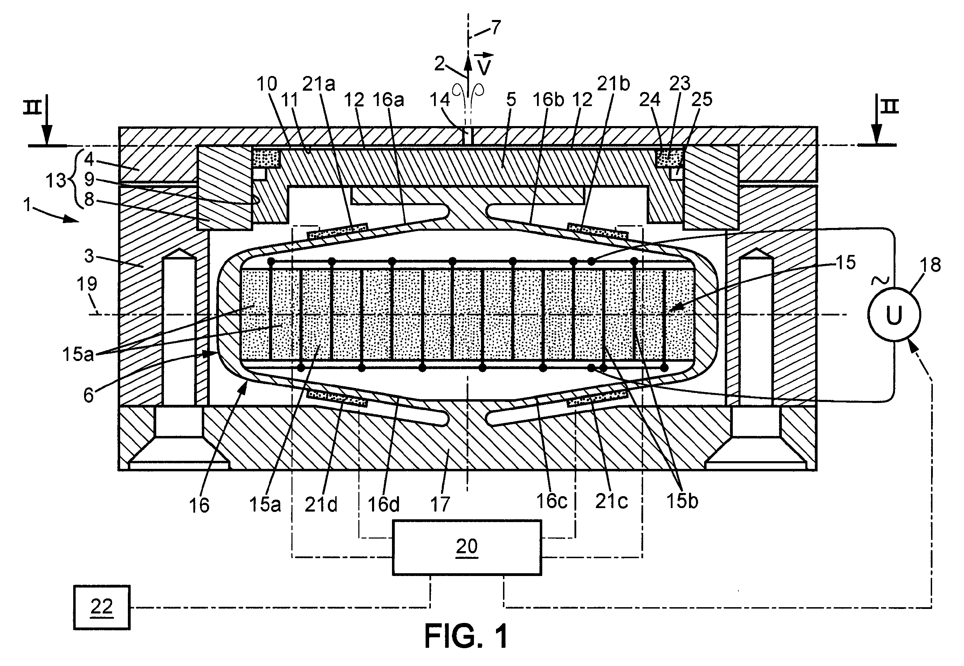

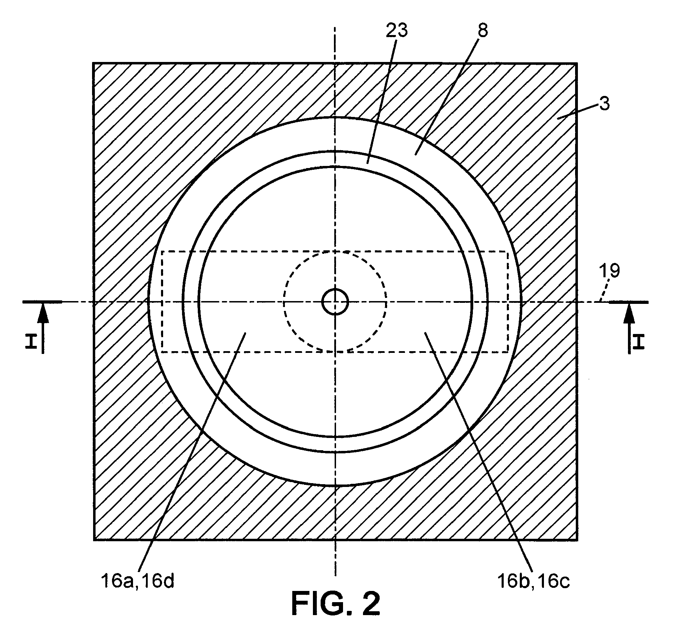

Comme illustré aux figures 1 et 2, le générateur 1 de jets synthétiques 2 comprend un corps principal 3 de forme extérieure sensiblement parallélépipédique, une culasse 4, un piston cylindrique 5 et un actionneur 6. L'actionneur 6 entraîne le piston 5 selon une direction 7 de coulissement du piston 5. Le générateur 1 comprend en outre une chemise 8 cylindrique et coaxiale à la direction de coulissement 7. Le piston cylindrique 5 est ajusté à un diamètre intérieur 9 de la chemise 8. La chemise 8 sert également de cale de réglage 8 qui est prise en sandwich entre le couvercle 4 et le corps principal 3 par un système de vis non représenté.

Le générateur 1 présente une cavité 10 délimitée par une surface intérieure 11 de la culasse 4 qui est plane, et contre laquelle la chemise 8 vient en appui étanche. Le piston 5 présente une surface frontale 12 plane parallèle à la surface intérieure 11 de la culasse 4 et perpendiculaire à la direction de coulissement 7 du piston 5. La culasse 4 et la chemise 8 constituent ensemble une paroi fixe 13 délimitant la cavité 10. La surface frontale 12 du piston 5 constitue une paroi mobile 12 de la cavité 10. La culasse 4 présente un orifice 14 débouchant dans la cavité 10.

L'actionneur 6 est constitué par un barreau piézoélectrique 15 et par un ensemble de quatre bras 16a, 16b, 16c, 16d concaténés entre eux pour former ensemble une structure déformable 16 en forme de boucle fermée. Une première extrémité du barreau piézoélectrique 15 est raccordée par le bras 16a au piston et par le bras 16d à un socle 17 fixé au corps principal 3. L'autre extrémité du barreau piézoélectrique 15 est reliée par le bras 16b au piston 5 et par le bras 16c au socle 17. Ainsi, lorsque le barreau piézoélectrique 15 s'allonge, le piston 5 se rapproche du socle 17, la cavité 10 augmente de volume et du fluide est aspiré dans la cavité 10. Inversement, lorsque le barreau piézoélectrique 15 se contracte, le piston 5 s'éloigne du socle 17 et du fluide est expulsé de la cavité 10.

Chacune des extrémités du barreau piézoélectrique 15 constitue un point de raccordement des bras 16a et 16d d'une part, et des bras 16b et 16c d'autre part. Les extrémités opposées des bras 16a et 16b se rejoignent en un point de raccordement solidaire du piston 5 et ayant la forme d'un étranglement de matière de manière à permettre les légères déformations des bras 16a, 16b, sans jeu mécanique, tout en transmettant l'effort axial au piston 5. De même, les bras 16c et 16d présentent des extrémités opposées à celles raccordées au barreau piézoélectrique 15 qui sont raccordées en un même point de raccordement au socle 17. Ce dernier point de raccordement est constitué par un étranglement de matière. L'ensemble des bras 16a, 16d est symétrique des bras 16b, 16c par rapport à un plan passant par la direction de coulissement 7 et perpendiculaire au barreau piézoélectrique 15. Les bras 16a, 16b sont symétriques des bras 16c, 16d par rapport à un plan de symétrie 19 du barreau piézoélectrique 15 et perpendiculaire à la direction de coulissement 7.

Le barreau piézoélectrique est constitué par un empilement de cellules piézoélectriques 15a séparées les unes des autres par des électrodes 15b dont une sur deux sont raccordées électriquement entre elles et à l'une des bornes d'un générateur 18 de tension d'excitation tandis que les autres électrodes 15b sont reliées entre elles et à l'autre borne du générateur 18 de tension d'excitation. Les électrodes 15b d'excitation sont perpendiculaires au plan de symétrie 19 du barreau 15.

Le générateur 1 de jets synthétiques comprend également un capteur de déplacement axial du piston 5, le capteur est constitué par un ensemble de quatre jauges de contrainte 21a,21b,21c,21d disposées sur chacun des bras 16a, 16b, 16c,16d. Un dispositif 20 d'asservissement est relié à un moyen 22 de réception d'une consigne de fréquence et d'amplitude de vitesse de jets éjectés ainsi qu'au générateur 18 de tension d'excitation du barreau piézoélectrique 15.

L'obtention d'un certain niveau d'énergie de jets synthétiques revient à augmenter la vitesse d'éjection du fluide pour une section donnée de l'orifice d'éjection. Cela est dû au cumul de plusieurs types d'amplification. Un premier type d'amplification est dû au rapport entre la surface de la paroi mobile délimitant la cavité sur la surface de l'orifice. L'inventeur s'est cependant rendu compte que l'on ne peut pas augmenter indéfiniment la surface de la paroi libre car cela pose un problème de rigidité du piston difficile à réaliser dans un piston léger. Un piston trop grand ferait apparaître des résonances parasites dans la cavité. Un autre type d'amplification est dû à la concaténation d'un nombre important de cellules piézoélectriques dans le barreau. Toutefois, le nombre de cellules du barreau piézoélectrique est limité par l'encombrement et par le comportement en vibration d'un barreau de grande longueur. Le fait d'avoir recours à un autre type d'amplification par un mécanisme d'amplification mécanique de déplacement permet d'obtenir un niveau élevé d'énergie des jets synthétiques générés et une bonne compacité du générateur.

Chacune des jauges de contrainte 21a,21b,21c,21d comprend une portion de jauge mesurant l'allongement longitudinal du bras correspondant 16a,16b,16c,16d. De manière avantageuse, mais non obligatoire, chacune des jauges de contraintes 21a,21b,21c,21d comprend également une portion de jauge mesurant l'allongement transversal du bras de manière à tenir compte du coefficient de Poisson du matériau du bras.

Dans une variante, le capteur de déplacement axial du piston 5 comprend uniquement les jauges de contrainte 21a et 21b précédemment décrites avec leurs variantes. Les deux jauges de contrainte sont montées en demi-pont pour mesurer le déplacement axial du piston 5.

Un joint élastomère 23 annulaire est disposé dans une encoche périphérique 24 du piston 5 en étant comprimé par sa paroi radialement intérieure sur le piston 5 et par sa paroi radialement extérieure sur la cale de réglage 8. Le piston présente également un évidemment extérieur 25 de manière que chaque côté de la portion du joint élastomère 23 en contact avec la cale de réglage 8 soit libre pour permettre la déformation du joint élastomère 23 lors du coulissement axial du piston 5. La course du piston 5 étant de l'ordre de 500 microns, le diamètre du piston 5 est compris entre 10 et 20 millimètres par exemple environ 15 millimètres, l'épaisseur radiale du joint élastomère 23 est inférieure à un millimètre et peut être par exemple en silicone.

Dans une variante, l'actionneur est constitué par plusieurs ensembles de quatre bras équipés chacun d'un barreau 15 transversal. Les ensembles sont montés l'un sur l'autre axialement en série de manière à augmenter encore l'amplification mécanique du déplacement axial sans réduire la force d'entraînement du piston 5. Il devient alors possible de déplacer le point milieu de la course du piston.

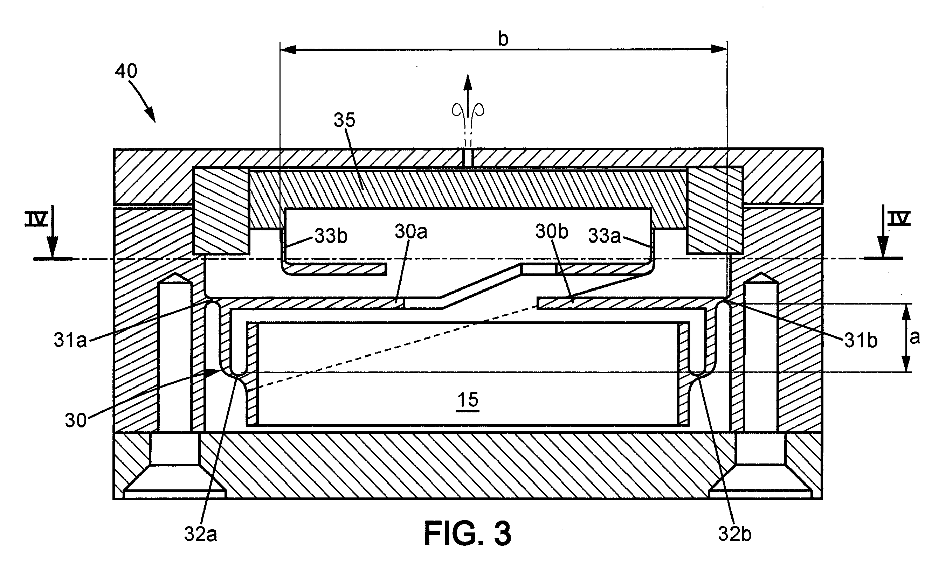

On va, à l'aide des figures 3 à 5, décrire un générateur 40 comprenant un mécanisme 30 d'amplification mécanique de déplacement incluant une paire de bras de levier 30a, 30b. Chaque bras de levier 30a, 30b est articulé par rapport au corps principal 3 par un étranglement de matière en forme d'arrête 31a, 31b et présente la forme d'une cornière de manière à en garantir la rigidité. Le barreau piézoélectrique 15 est raccordé par l'une de ses extrémités à un petit côté (a) de chacun des bras de levier 30a et 30b par l'intermédiaire d'un deuxième étranglement de matière en forme d'arrête 32a, 32b parallèle à la première charnière 31a, 31b. Un grand côté (b) du bras de levier est relié par une troisième charnière 33a, 33b, également parallèle à la première charnière 31a, 31b, au piston 5.

Les bras de levier 30a et 30b sont illustrés en figure 3 comme formant un ensemble monobloc avec le corps 3. L'homme du métier pourra utiliser l'une quelconque des techniques d'assemblage bien connues pour réaliser cet ensemble. Par exemple, chaque bras de levier 30a,30b peut être initialement indépendant et présenter une oreille de fixation au-delà de l'étranglement en forme d'arrête 31a, 31b. L'arrête de fixation peut alors être soudée sur le corps 3.

Le piston 35 coulisse selon la direction de coulissement 7 mais présente une surface frontale 12 rectangulaire, allongée dans le même sens que le barreau piézoélectrique 15. Cela permet de juxtaposer plusieurs générateurs de jets synthétiques côte à côte dans le sens de la largeur du piston 35 de manière à générer une succession alignée d'orifices 14 de jets synthétiques.

Bien entendu, la forme rectangulaire du piston 35 est compatible avec le dispositif d'amplification mécanique de déplacement décrit aux figures 1 et 2. De même, le système des bras de levier décrit en figure 3 est compatible avec un piston 5 cylindrique.

Dans une autre variante, le générateur de jets synthétiques ne présente pas de cale de réglage 8.

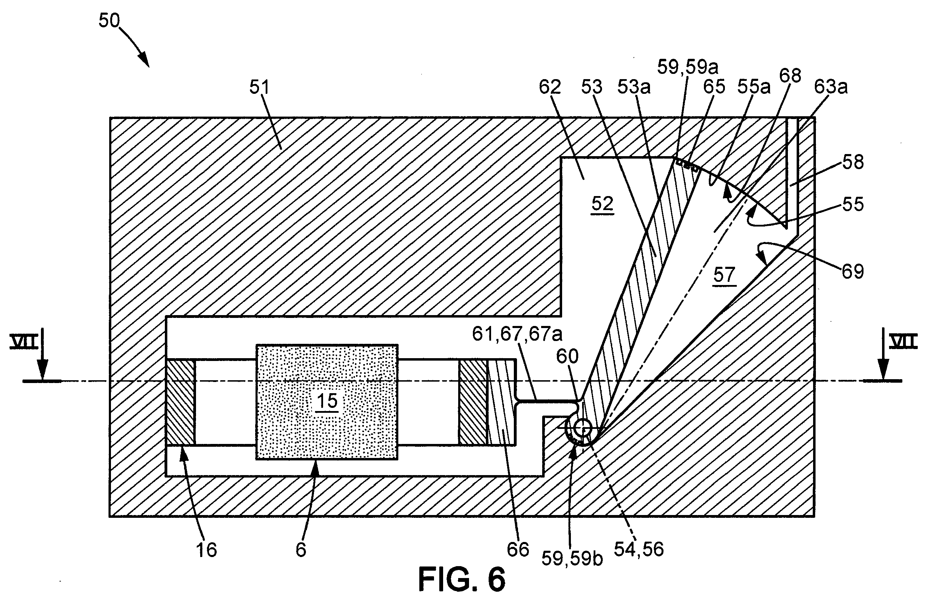

On va à l'aide des figures 6 à 8 décrire un générateur 50 qui comprend le même actionneur 6 que le mode de réalisation décrit aux figures 1 et 2. Le générateur 50 comprend un corps principal 51 présentant un évidement 52. Cet évidement 52 traverse le corps principal 51 de part en part. Le générateur 50 comprend également un piston 53 en forme de volet pivotant en rotation dans le corps principal 51 autour d'un axe de rotation 54.

L'évidement 52 comprend une cavité 57 délimitée par une surface cylindrique 55 concentrique à l'axe de rotation 54. Le générateur 50 comprend un moyen de guidage 56 du piston 53 en rotation. Ledit moyen 56 est constitué d'un arbre et d'un palier rotatif non représenté conçu pour que le piston 53 ne frotte pas sur la surface cylindrique 55. Avantageusement, le moyen 56 de guidage peut être conçu pour guider sans jeu selon les directions radiale et/ou axiale de l'axe 54 de rotation.

L'évidement 52 comprend un orifice 58 qui relie la cavité 57 à l'extérieur du générateur 50. L'orifice 58 présente la forme d'une fente s'étendant tout le long de l'évidement 52, parallèlement à l'axe de rotation 54.

Le volet servant de piston 53 comprend un côté 59a s'étendant en regard d'une zone de coulissement 55a de la surface cylindrique 55. La portion du corps principal 51 s'étendant entre la zone de coulissement 55a et l'orifice 58, ainsi que la portion s'étendant radialement entre l'orifice 58 et l'axe 54 constitue une culasse 69.

Le déplacement du piston 53 par l'actionneur 6 est illustré par le trait mixte. La position illustrée en train plein correspond à la position extrême basse du piston. Avantageusement, la position extrême haute du piston 53 peut être celle où le piston 53 est dans l'alignement avec ou affleure l'orifice 58.

Le volet servant de piston 53 présente une forme généralement parallélépipédique aplati présentant toutefois un côté 59b, proche de l'axe 54 et ayant une forme sensiblement cylindrique. Une face 53a du piston 53, parallèle à l'axe 54 et orientée du côté extérieur à la cavité 57, présente un point de raccordement 60 situé à distance de l'axe de rotation 54. Au cours du déplacement du piston 53, le point de raccordement 60 décrit un arc de cercle. Un moyen de raccordement 61 est constitué d'une lame fine s'étendant parallèlement à l'axe 54 et encastrée, par une de ses arêtes au point 60 de raccordement et par une arête opposée à l'actionneur 6. La lame fine constitue un pont de matière permettant de transmettre un effort et un déplacement de l'actionneur 6 dans une direction parallèle à la lame avec un degré de flexibilité due à la flexion de la lame.

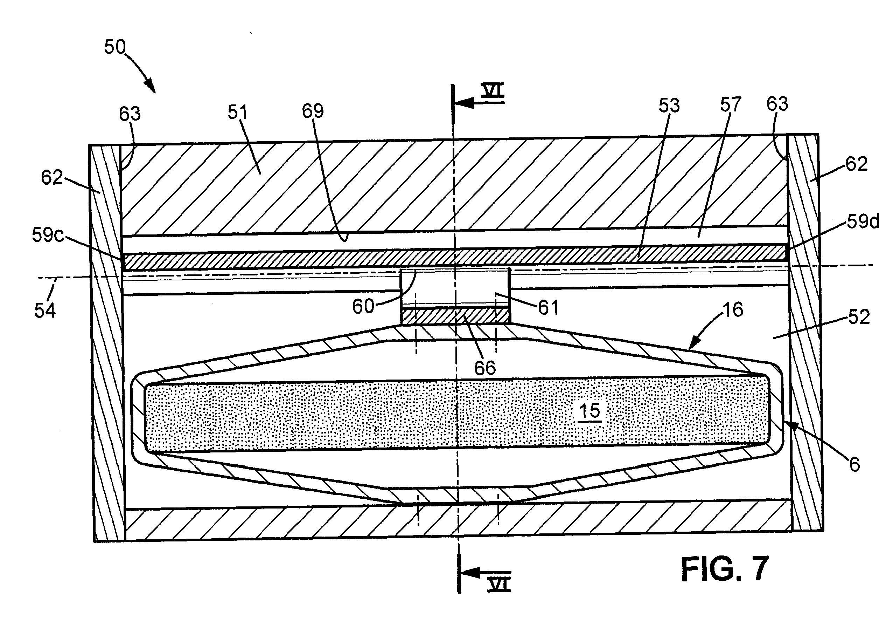

Comme illustré en figure 7, l'actionneur 50 comprend deux flancs latéraux 62 fixés au corps 51 principal. Chacun des flancs latéraux 62 comprend une face 63 s'étendant perpendiculairement à l'axe 54 et occultant de façon étanche les deux extrémités de l'évidement 52. Le piston 53 parallélépipédique comprend deux côtés latéraux 59c et 59d qui sont parallèles et en regard des faces 63. La zone 55a de coulissement du corps principal 51 est prolongé par une portion 63a des faces 63 qui est en regard des côtés 59c et 59d lors du pivotement du piston 53.

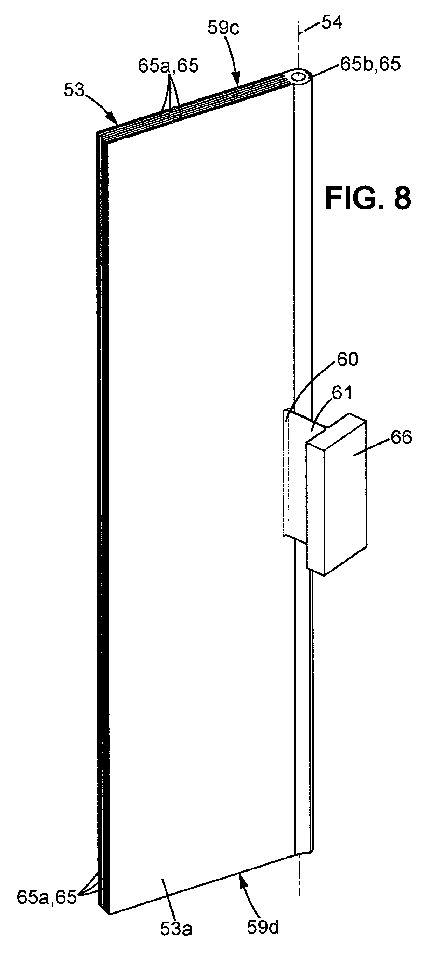

Comme illustré en figure 8, le piston 53 est équipé d'au moins une gorge 65, ici de trois gorges parallèles 65 s'étendant quasiment tout le long du périmètre de la forme parallélépipédique aplatie du piston 53. Une première zone 65a des gorges 65 s'étend le long du côté 59a et des deux côtés latéraux 59c et 59d. Une autre zone 65b des gorges 65 s'étend le long du côté 59b. L'ensemble des côtés 59a, 59b, 59d, 59d constitue une zone d'étanchéité 59 du piston 53.

Le piston 53 fait partie d'un ensemble monobloc comprenant en outre, le pont de matière 61 en forme de lame et une semelle de raccordement 66 reliant le pont 61 à l'actionneur 6. Ainsi, le pont de matière 61 en forme de lame présente deux directions de rigidité dans le plan de la lame. L'une des directions de rigidité est parallèle à l'arrête de la lame 61 raccordée au point 60 de raccordement, l'autre est sensiblement perpendiculaire à cette arrête. Le pont de matière 61 est en outre déformable élastiquement par flexion selon une direction transversale au plan de la lame 61. Cela permet au pont de matière 61 de transmettre dans le plan de la lame un effort et un déplacement de l'actionneur vers point de raccordement sans présenter de jeu mécanique.

Dans une variante, le moyen de raccordement 61 entre l'actionneur 6 et le piston 53 est une bielle articulée au point 60 de raccordement et/ou sur une extrémité de l'actionneur 6.

Dans une variante, le moyen de raccordement 61 peut être encastré ou monobloc avec l'actionneur 6.

Une la semelle 66 fixée sur l'actionneur 6, et l'actionneur 6 fixé dans le corps principal 51, le piston 53 en forme de volet pivote sans jeu autour de l'axe 54 et présente un frottement mécanique réduit au seul palier en rotation du moyen de guidage 56.

Cette absence quasi-totale de frottement mécanique et de jeu permet une très bonne linéarité de la réponse du générateur 50 qui présente un rapport sensiblement constant entre les variations d'amplitude des tensions alternatives d'alimentation du barreau piézoélectrique 15 et de la variation d'amplitude de vitesse de fluide des jets générés.

De plus, la distance radiale entre le point de raccordement 60 et l'axe de rotation 54 est de l'ordre de 1/20^{ème} à 1/3 du rayon de la surface cylindrique 55. Cela confère un effet de levier qui contribue à l'amplification mécanique de mouvements. En effet, cela augmente le rapport de la variation du volume de la cavité 57 sur le déplacement généré par l'actionneur 6. L'amplification mécanique due à la structure déformable 16 peut générer un déplacement de l'actionneur 6 de 5 à 15 fois, notamment de 10 fois le déplacement du barreau piézoélectrique et l'amplification due à l'effet de levier peut générer une variation de volume de la cavité 57 divisé par la surface du piston 53 de 1.5 à 10 fois le déplacement de l'actionneur 6.

Le fait que l'orifice 58 soit en forme de fente permet d'agir efficacement sur des écoulements principaux présentant une direction le long de laquelle les caractéristiques dynamiques de l'écoulement principal varient peu.

Dans une variante, le moyen de guidage 56 ci-dessus peut être constitué par un pont de matière en forme de lame faisant saillie du côté 59b du volet et emmanchée dans le corps principal 51. La flexion de cette lame s'accompagne alors d'un mouvement du piston 53 qui correspond sensiblement à la rotation autour de l'axe de rotation 54.

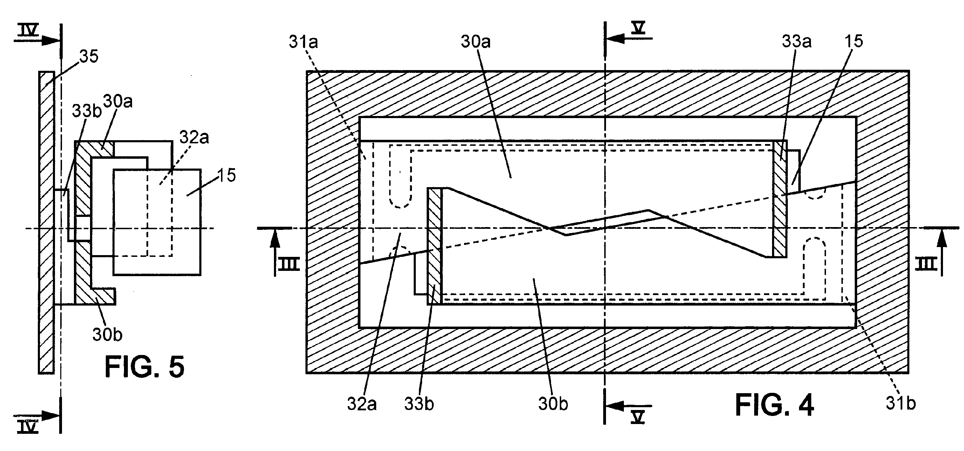

Dans une variante, l'actionneur 6 peut être remplacé par l'actionneur 30 décrit aux figures 3 et 4.

Dans une variante, le mode de réalisation décrit aux figures 1 et 2 peut être dépourvu de joint élastomère et peut comprendre des gorges d'étanchéité analogue aux gorges 65.

## Revendications

1. Générateur (1, 40, 50) de jets synthétiques (2) pour un écoulement principal de fluide, le générateur comprenant une cavité (10, 57) délimitée par une paroi fixe (13, 51) et par une paroi mobile, la paroi fixe comportant une chemise (8, 68) et une culasse (4, 69) munie d'un orifice (14, 58) par lequel est aspiré et éjecté le jet généré de fluide (2) dans l'écoulement principal de fluide, la paroi mobile étant en regard de la culasse; le générateur comprenant un piston (3, 35, 53) rigide incluant la paroi mobile et coulissant de façon étanche dans la chemise (8, 68), le générateur comprenant en outre un actionneur (6) lié mécaniquement au piston apte à entraîner le piston dans un mouvement alternatif présentant une amplitude et une fréquence variables, au moins l'amplitude étant variable pendant le mouvement, **caractérisé en ce que** l'actionneur comprend un mécanisme d'amplification mécanique de déplacement (16, 30).

2. Générateur selon la revendication 1, présentant une plage de fréquence des jets générés et dans lequel l'actionneur présente une fréquence propre de résonnance dans la direction (7) de coulissement du piston (5,35) supérieure à ladite plage de fréquence des jets générés.

3. Générateur selon l'une des revendications précédentes, dans lequel l'actionneur comprend un barreau piézoélectrique (15) .

4. Générateur selon la revendication 3, dans lequel le barreau piézoélectrique est allongé selon un axe (19) sensiblement perpendiculaire à la direction (7) de coulissement du piston (5,35).

5. Générateur selon la revendication 3 ou 4, dans lequel le mécanisme d'amplification mécanique de déplacement comprend une structure (16, 30a, 30b) mécanique déformable, raccordée à, et distinct du barreau piézoélectrique (15), ladite structure étant agencée dans le générateur de manière qu'une variation de longueur du barreau piézoélectrique déforme la structure mécanique et provoque le déplacement du piston.

6. Générateur selon l'une des revendications précédentes, dans lequel l'actionneur (6) est lié mécaniquement à un point de raccordement (60) du piston (53) par un moyen de raccordement (61) qui présente au moins une direction de rigidité le long de laquelle le moyen de raccordement est apte à transmettre un effort et un déplacement de l'actionneur (6) et qui est mobile selon une direction transversale à la direction de rigidité.

7. Générateur selon la revendication 6, dans lequel le piston (5, 53) est mobile en translation, parallèlement au déplacement dudit point de raccordement, ou est mobile en rotation autour d'un axe (54) transversal au déplacement dudit point de raccordement (60) et à distance de ce point.

8. Générateur selon l'une des revendications précédentes, comprenant un moyen de guidage (56) du coulissement du piston (53) dans la chemise (68), lequel moyen est distinct de la chemise (68) elle-même.

9. Générateur selon l'une des revendications précédentes, dans lequel le piston présente une surface d'étanchéité (59) s'étendant en regard d'une zone de coulissement (9, 55a) de la chemise (68), la surface d'étanchéité ou la zone de coulissement étant pourvue d'au moins une gorge (65) constituant une perte charge s'opposant à un écoulement du fluide entre la surface d'étanchéité (59) et la zone de coulissement (55a).

10. Générateur selon l'une des revendications 1 à 8, comprenant un joint (23) élastomère annulaire présentant un bord radialement intérieur fixé sur le pourtour du piston (5) et un bord radialement extérieur fixé à la paroi fixe (13).

11. Générateur selon l'une des revendications précédentes, dans lequel la cavité (10, 57) présente un volume qui varie entre un volume mort et un volume maximum en fonction de la position du piston (5,35,53), et dans lequel le volume mort est inférieur ou égal à la moitié du volume maximum, de préférence inférieur au cinquième du volume maximum, en particulier inférieur au dixième du volume maximum.

12. Générateur selon l'une des revendications précédentes, comprenant un dispositif d'asservissement (20) de l'actionneur relié à un moyen de réception (22) d'une consigne de vitesse de jet et de fréquence, et relié à un capteur de déplacement du piston (5,35).

13. Générateur selon la revendication 12, dans lequel l'actionneur comprend quatre bras (16a,16b,16c,16d) raccordés successivement les uns aux autres par quatre points de raccordement pour former ensemble une boucle fermée, lesdits points de raccordement successifs étant respectivement raccordés à la paroi fixe (13), à l'une des extrémités du barreau piézoélectrique (15), au piston (5), et à l'autre extrémité du barreau piézoélectrique (15), et dans lequel le dispositif d'asservissement est relié à l'alimentation électrique (18) du barreau piézoélectrique (15), le capteur de déplacement du piston comprenant un pont de jauges (21a,21b,21c,21d) disposées sur les bras (16a,16b,16c,16d) en boucle.

14. Générateur selon l'une des revendications précédentes, comprenant un premier mécanisme piloté en fréquence et/ou en amplitude, monté en série avec un deuxième mécanisme piloté en amplitude seulement.

15. Micro-actionneur fluidique par jets synthétiques comprenant une paroi principale le long de laquelle s'écoule un fluide et comprenant un générateur (1, 40, 50) de jets synthétiques (2) selon l'une des revendications précédentes, dans lequel l'orifice (14) traverse la paroi principale et relie la cavité (10) à l'écoulement de fluide, et dans lequel la cavité (10) est remplie de ce même fluide.

## Patentansprüche

1. Generator (1,40,50) zur Erzeugung von synthetischen Sprühstrahlen (2) für eine Hauptfluidströmung, wobei der Generator einen von einer stationären Wand (13,51) und von einer verschiebbaren Wand begrenzten Hohlraum (10,57) aufweist, wobei die stationäre Wand einen Mantel (8,68) und ein Kopfteil (4,69) aufweist, das mit einer Öffnung (14,58) versehen ist, durch welche der erzeugte Fluidsprühstrahl (2) gesaugt und in die Hauptfluidströmung ausgestoßen wird, wobei die verschiebbare Wand gegenüber dem Kopfteil angeordnet ist; wobei der Generator einen steifen Kolben (3,35,53) aufweist, der die verschiebbare Wand aufweist und auf dichte Weise in dem Mantel (8,68) gleitet, wobei der Generator außerdem einen mechanisch mit dem Kolben verbundenen Aktuator (6) aufweist, der den Kolben in eine alternierende Bewegung mit veränderlicher Amplitude und veränderlicher Frequenz versetzen kann, wobei zumindest die Amplitude während der Bewegung veränderlich ist, **dadurch gekennzeichnet, dass** der Aktuator einen Mechanismus (16,30) zur mechanischen Verstärkung der Verschiebung aufweist.

2. Generator nach Anspruch 1, welcher einen Frequenzbereich der erzeugten Sprühstrahlen aufweist und in welchem der Aktuator eine Resonanzeigenfrequenz in Gleitrichtung (7) des Kolbens (5,35) aufweist, die größer ist als der Frequenzbereich der erzeugten Sprühstrahlen.

3. Generator nach einem der vorstehenden Ansprüche, in welchem der Aktuator einen piezoelektrischen Stab (15) aufweist.

4. Generator nach Anspruch 3, in welchem sich die Längsachse (19) des piezoelektrischen Stabs in eine Richtung erstreckt, die im Wesentlichen senkrecht zur Gleitrichtung (7) des Kolbens (5,35) ist.

5. Generator nach Anspruch 3 oder 4, in welchem der Mechanismus der mechanischen Verstärkung der Verschiebung eine verformbare mechanische Struktur (16,30a,30b) aufweist, die mit dem piezoelektrischen Stab (15) verbunden und separat zu diesem ist, wobei die Struktur so in dem Generator angeordnet ist, dass eine Längenänderung des piezoelektrischen Stabs die mechanische Struktur verformt und eine Verschiebung des Kolbens hervorruft.

6. Generator nach einem der vorstehenden Ansprüche, in welchem der Aktuator (6) über eine Verbindungseinrichtung (61) mechanisch mit einer Verbindungsstelle (60) des Kolbens (53) verbunden ist, wobei die Verbindungseinrichtung (61) mindestens eine Steifigkeitsrichtung aufweist, entlang derer die Verbindungseinrichtung eine Kraft und eine Verschiebung des Aktuators (6) übertragen kann, und in eine Richtung beweglich ist, die transversal zur Steifigkeitsrichtung ist.

7. Generator nach Anspruch 6, in welchem der Kolben (5,53) parallel zur Verschiebung der Verbindungsstelle translationsverschiebbar ist oder um eine Achse (54) drehbar ist, die transversal zur Verschiebung der Verbindungsstelle (60) und in einem Abstand von dieser Stelle angeordnet ist.

8. Generator nach einem der vorstehenden Ansprüche, mit einer Führungseinrichtung (56) zum Führen der Gleitbewegung des Kolbens (53) in dem Mantel (68), wobei die Einrichtung und der Mantel (68) separat sind.

9. Generator nach einem der vorstehenden Ansprüche, in welchem der Kolben eine Dichtungsfläche (59) aufweist, die sich gegenüber einer Gleitzone (9,55a) des Mantels (68) erstreckt, wobei die Dichtungsfläche oder die Gleitzone mit mindestens einer Rille (65) versehen ist, die einen Druckverlust bildet, der einer Strömung des Fluides zwischen der Dichtungsfläche (59) und der Gleitzone entgegenwirkt.

10. Generator nach einem der Ansprüche 1 bis 8, mit einem Dichtungsring (23) aus einem Elastomermaterial, der einen am Umfang des Kolbens (5) angebrachten, radial inneren Rand und einen an der stationären Wand (13) angebrachten, radial äußeren Rand aufweist.

11. Generator nach einem der vorstehenden Ansprüche, in welchem der Hohlraum (10,57) ein Volumen aufweist, das in Abhängigkeit von der Position des Kolbens (5,35,53) zwischen einem Totvolumen und einem maximalen Volumen variiert, und in welchem das Totvolumen kleiner oder gleich der Hälfte des maximalen Volumens, bevorzugt kleiner als ein Fünftel des maximalen Volumens, insbesondere kleiner als ein Zehntel des maximalen Volumens, ist.

12. Generator nach einem der vorstehenden Ansprüche, mit einer Steuervorrichtung (20) zur Steuerung des Aktuators, die an eine Empfangseinrichtung (22) zum Empfangen eines Sollwerts für die Sprühstrahlgeschwindigkeit und Frequenz angeschlossen ist und an einen Verschiebungssensor des Kolbens (5,35) angeschlossen ist.

13. Generator nach Anspruch 12, in welchem der Aktuator vier Arme (16a,16b,16c,16d) aufweist, die über vier Verbindungsstellen aufeinanderfolgend miteinander verbunden sind, um zusammen eine geschlossene Schleife zu bilden, wobei die aufeinanderfolgenden Verbindungsstellen mit der stationären Wand (13), mit einem der Enden des piezoelektrischen Stabs (15), mit dem Kolben (5) bzw. mit dem anderen Ende des piezoelektrischen Stabs (15) verbunden sind, und in welchem die Steuervorrichtung mit der elektrischen Energieversorgung (18) des piezoelektrischen Stabs (15) verbunden ist, wobei der Verschiebungssensor des Kolbens eine Anordnung aus Dehnungsmessstreifen (21a,21b,21c,21d) aufweist, die an den Armen (16a,16b,16c,16d) der Schleife angeordnet sind.

14. Generator nach einem der vorstehenden Ansprüche, mit einem frequenz- und/oder amplitudengesteuerten ersten Mechanismus, der in Reihe mit einem nur amplitudengesteuerten zweiten Mechanismus angeordnet ist.

15. Fluidischer Mikroaktuator für synthetische Sprühstrahlen, mit einer Hauptwand, entlang derer ein Fluid strömt, und mit einem Generator (1,40,50) zur Erzeugung von synthetischen Sprühstrahlen (2) nach einem der vorstehenden Ansprüche, in welchem sich die Öffnung (14) durch die Hauptwand hindurch erstreckt und den Hohlraum (10) mit der Fluidströmung verbindet, und in welchem der Hohlraum (10) mit dem gleichen Fluid gefüllt ist.

## Claims

1. Generator (1, 40, 50) of synthetic jets (2) for a main flow of fluid, the generator comprising a cavity (10, 57) delimited by a fixed wall (13, 51) and by a mobile wall, the fixed wall comprising a sleeve (8, 68) and a head (4, 69) provided with an orifice (14, 58) through which the generated jet of fluid (2) is drawn in from and ejected into the main flow of fluid, the mobile wall being opposite the head; the generator comprising a rigid piston (3, 35, 53) including the mobile wall and sliding in a fluid-tight manner in the sleeve (8, 68), the generator further comprising an actuator (6) mechanically linked with the piston and able to drive the piston with an alternating movement having variable amplitude and frequency, at least the amplitude being variable during the movement, **characterized in that** the actuator comprises a mechanism for the mechanical amplification of displacement (16, 30).

2. Generator according to claim 1, having a range of frequency of the generated jets and wherein the actuator has a natural resonant frequency in the direction (7) of sliding of the piston (5, 35) higher than said range of frequency of the generated jets.

3. Generator according to anyone of the previous claims, wherein the actuator comprises a piezoelectric rod (15).

4. Generator according to claim 3, wherein the piezoelectric rod is elongated along an axis (19) substantially perpendicular to the direction (7) of sliding of the piston (5, 35).

5. Generator according to claim 3 or 4, wherein the mechanism for the mechanical amplification of displacement comprises a deformable mechanical structure (16, 30a, 30b), connected to and separate from the piezoelectric rod (15), said structure being arranged in the generator such that a variation in length of the piezoelectric rod deforms the mechanical structure and causes the displacement of the piston.

6. Generator according to anyone of the previous claims, wherein the actuator (6) is mechanically linked to a point of connection (60) of the piston (53) by connection means (61) which exhibit at least one direction of rigidity along which the connection means are able to transmit a force and a displacement of the actuator (6) and which is mobile in a direction transverse to the direction of rigidity.

7. Generator according to claim 6, wherein the piston (5, 53) is mobile in translation, parallel with the displacement of said point of connection or is mobile in rotation about an axis (54) which is transverse to the displacement of said point of connection (60) and distant from this point.

8. Generator according to anyone of the previous claims, comprising means of guiding (56) the sliding of the piston (53) in the sleeve (68), said means being separate from the sleeve (68) itself.

9. Generator according to anyone of the previous claims, wherein the piston has a fluid-tight surface (59) extending facing a sliding zone (9, 55a) of the sleeve (68), the fluid-tight surface or the sliding zone being provided with at least one groove (65) constituting a load loss opposing a flow of the fluid between the fluid-tight surface (59) and the sliding zone (55a).

10. Generator according to anyone of claims 1 to 8, comprising an annular elastomer seal (23) having a radially inside edge fixed on the perimeter of the piston (5) and a radially outside edge fixed to the fixed wall (13).

11. Generator according to anyone of the previous claims, wherein the cavity (10, 57) has a volume which varies between a dead volume and a maximum volume depending on the position of the piston (5, 35, 53), and wherein the dead volume is less than or equal to half of the maximum volume, preferably less than a fifth of the maximum volume, in particular less than a tenth of the maximum volume.

12. Generator according to anyone of the previous claims, comprising a device (20) for the servo-control of the actuator connected to means of receiving (22) a jet speed and frequency instruction and connected to a sensor of the displacement of the piston (5, 35).

13. Generator according to claim 12, wherein the actuator comprises four arms (16a, 16b, 16c, 16d) connected in succession to each other by four connection points in order to jointly form a closed loop, said successive connection points being respectively connected to the fixed wall (13), to one of the ends of the piezoelectric rod (15), to the piston (5) and to the other end of the piezoelectric rod (15), and wherein the servo-control device is connected to the electrical power supply (18) of the piezoelectric rod (15), the piston displacement sensor comprising a bridge of gauges (21a, 21b, 21c, 21d) arranged on the arms 16a, 16b, 16c, 16d) of the loop.

14. Generator according to anyone of the previous claims, comprising a first mechanism controlled in frequency and/or in amplitude, connected in series with a second mechanism controlled in amplitude only.

15. Fluidic micro-actuator using synthetic jets comprising a main wall along which a fluid flows and comprising a generator (1, 40, 50) of synthetic jets (2) according to anyone of the previous claims, wherein the orifice (14) passes through the main wall and connects the cavity (10) to the flow of fluid, and wherein the cavity (10) is filled with this same fluid.
